# EUROPÄISCHE PATENTSCHRIFT

(11) **EP 0 879 642 B1**
(45) Veröffentlichungstag und Bekanntmachung des Hinweises auf die Patenterteilung: **22.08.2001**
(21) Anmeldenummer: 98108576.4
(22) Anmeldetag: 12.05.1998
(51) Int. Cl.: B01J 23/44, B01J 31/06, B01J 13/02

(54) **Polybetain-stabilisierte, palladiumhaltige Nanopartikel, ein Verfahren zu ihrer Herstellung sowie daraus hergestellte Katalysatoren zur Gewinnung von Vinylacetat.**
Nanoparticules containing palladium and stabilized with a polybetaine, preparation process and catalyst prepared thereof for the production of vinyl acetate
Nanoparticules contenant du palladium et stabilisées par une polybétaine, leur procédé de préparation ainsi que le catalyseur ainsi préparé pour la production d'acétate de vinyle

(30) Priorität: 23.05.1997 DE 19721601
(43) Veröffentlichungstag der Anmeldung: 25.11.1998
(73) Patentinhaber: Celanese Chemicals Europe GmbH, 60439 Frankfurt am Main (DE)
(72) Erfinder: Hagemeyer, Alfred, Dr., 65929 Frankfurt (DE); Dingerdissen, Uwe, Dr., 64342 Seeheim-Jugenheim (DE); Millauer, Hans, Dr., 65760 Eschborn (DE); Manz, Andreas, 76547 Sinzheim (DE); Kühlein, Klaus, Prof. Dr., 65779 Kelkheim (DE)

(56) Entgegenhaltungen:
- DE-A- 4 443 705
- DE-A- 19 500 366

## Beschreibung

Gegenstand der Erfindung sind lösliche Nanopartikel, welche Palladium allein oder Palladium zusammen mit Metallen der Nebengruppen Ib und VIIIb des periodischen Systems enthalten und durch Schutzkolloide stabilisiert sind, sowie ein Verfahren zu ihrer Herstellung nach dem Sol-Prozeß. Gegenstand der Erfindung sind ferner aus den vorstehend genannten Nanopartikeln hergestellte Katalysatoren zur Gewinnung von Vinylacetat.

Die katalytische Umsetzung von Ethylen, Sauerstoff und Essigsäure zu Vinylacetat, dem Ausgangsmonomeren einer wirtschaftlich bedeutenden Gruppe von Polymeren, wird großtechnisch in Rohrbündelreaktoren heterogenkatalysiert in der Gasphase durchgeführt. Die dafür benutzten Katalysatoren enthalten als katalytisch aktiven Bestandteil Palladium-haltige Partikel, die auf einem inerten Trägermaterial immobilisiert sind.

Im allgemeinen bestehen heterogene Katalysatoren aus einem inerten, porösen Träger, wie Formkörper, Schüttgut oder Pulver, und den katalytisch aktiven Komponenten, die sich auf der Oberfläche und in den Poren des Trägermaterials befinden. Bei der Herstellung solcher Katalysatoren kommt es darauf an, möglichst viele aktive Zentren zu bilden, d. h. die katalytisch wirksamen Komponenten in feiner Verteilung auf den Träger aufzubringen und auf der äußeren und inneren Oberfläche des Trägers an den Stellen, welche den Reaktanden zugänglich sind, möglichst fest zu verankern.

Für die Vinylacetat-Herstellung sind bereits verschiedene Herstellverfahren für Katalysatoren auf der Basis von Palladium beschrieben worden. Dabei kommen unterschiedliche Aktivkomponenten und Herstelltechniken zum Einsatz:

US-3 743 607 und GB-A-1 333 449 offenbaren die Herstellung von Pd/Au-Trägerkatalysatoren für die Vinylacetat-Synthese durch Tränkung des Trägers mit Pd/Au-Salzen und anschließende Reduktion. Es entstehen keine Schalenkatalysatoren, sondern die Edelmetalle sind über den gesamten Pelletquerschnitt gleichmäßig verteilt.

EP-A-0 519 436 offenbart Pd/Ba/K-Katalysatoren.

US-4 158 737 und US-4 119 567 offenbaren Pd/Au auf α-Al₂O₃-Trägem, US-4 188 490 Pd auf ZnO-Trägem.

US-5 336 802 offenbart Vorbehandlungen von Pd/Au-Katalysatoren durch mehrfache sequentielle Oxidations- und Reduktionsschritte.

DE-A-25 09 251 offenbart ein Verfahren zur Trocknung der Katalysatoren und DE-A-25 06 141 ein Verfahren zur Aktivierung des Katalysators in der Anfahrphase.

EP-A-0 403 950 offenbart Träger mit definierten Porenradien-Verteilungen.

EP-A-0 431 478 offenbart das Pressen von Trägerteilchen zu Formkörpem mit Hilfe von Carboxylaten als Bindemittel.

US-5 371 277 und EP-A-0 464 633 offenbaren Trägerformen mit Durchgangskanal (z.B. Ringtabletten) und EP-A-0 330 853, DE-A-38 03 900 Formkörper aus zylindrischen Teilchen mit gewölbten Stirnflächen und EP-A-0 004 079 Formkörper aus Rippsträngen oder Sternsträngen.

EP-A-0 048 946 offenbart Chlorverbindungen als Feedzusätze zur Verminderung der Totaloxidation von Ethylen zu CO₂.

EP-A-0 012 968 offenbart eine Reaktionsführung, wobei das molare Verhältnis von Essigsäure zu Sauerstoff im Feed größer als 2:1 ist.

Für die Erzeugung von Vinylacetat verwendet man häufig auch Schalenkatalysatoren. Dabei werden die katalytisch aktiven Metalle schalenförmig auf oder in der äußersten Schicht der Trägers abgeschieden. Ihre Herstellung erfolgt zum Teil durch Penetration des Trägers mit Metallsalzen bis in einen oberflächennahen Bereich und anschließende Fällung durch Alkalien zu wasserunlöslichen Pd/Au-Verbindungen :

GB-A-1 283 737 offenbart die Herstellung eines Edelmetall-Schalenkatalysators durch Vortränkung des Trägers mit einer alkalischen Lösung und Sättigung mit 25 - 90 % Wasser oder Alkohol. Die anschließende Imprägnierung mit Pd-Salzen und die Reduktion der abgeschiedenen Salze zum Metall ergibt Schalenkatalysatoren, wobei die Eindringtiefe der Edelmetalle bis zu 50% des Pelletradius betragen soll.

US-3 775 342 offenbart Schalenkatalysatoren, hergestellt durch Tränkung des Trägers mit einer Lösung aus Pd/Au-Salzen und mit einer wäßrigen Base, vorzugsweise NaOH, wobei unlösliche Pd- und Au-Hydroxide in einer schalenförmigen Oberflächenzone auf den Pellets ausfallen. Die auf diese Weise in der Schale fixierten Hydroxide werden dann zu den Metallen reduziert.

US-4 048 096 offenbart die Fällung wasserunlöslicher Pd- und Au-Verbindungen auf dem mit Pd/Au-Salzen vorimprägnierten Träger mit Na-Silikaten anstelle von NaOH. Die entstehende Schalendicke beträgt dabei weniger als 0.5 mm.

Aus EP-A-0 519 435 ist die Herstellung eines Pd/Au/K- oder Pd/Cd/K-Schalenkatalysators bekannt, wobei ein spezielles Trägermaterial vor der Imprägnierung mit einer Säure gewaschen und nach der Imprägnierung mit einer Base behandelt wird.

US-5 314 858 offenbart die zweifache Fixierung der Edelmetalle in einer äußeren Schale durch zwei separate Fällschritte mit NaOH.

EP-A-0 723 810 offenbart eine Vorbehandlung (Tränkung) des Trägers mit Al, Zr oder Ti-haltigen Metallsalzlösungen, der anschließend für die oben beschriebene Basenfällung zur Ausbildung eines Pd/Au/K-Schalenkatalysators eingesetzt wird.

Eine andere Methode zur Erzeugung von Schalenkatalysatoren besteht in der Vorbekeimung mit Metallen und anschließend die Abscheidung der vorgesehenen Menge der Edelmetalle:

JP-A-48-10135 offenbart die Herstellung eines Pd/Au-Schalenkatalysators. Dabei wird in einem Vorbehandlungsschritt eine kleine Menge an reduziertem Metall (Gold) auf dem porösen Träger abgeschieden. Durch nachfolgende Imprägnierung wird Pd in einer Oberflächenzone mit einer Dicke von ca. 15% des Partikelradius abgeschieden.

US-4 087 622 beschreibt die Herstellung von Schalenkatalysatoren durch Vorbekeimung mit (reduzierten) Pd/Au-Metallkeimen in geringer Konzentration, indem der poröse SiO₂- oder Al₂O₃-Träger mit einer Pd/Au-Salzlösung imprägniert wird, getrocknet wird und dann das Pd/Au-Salz zum Metall reduziert wird. Dem Pränukleationsschritt folgt die Abscheidung der katalytisch notwendigen Edelmetallmenge, also der Hauptmenge, die sich dann in einer oberflächennahen Schale anreichert.

Durch Anwendung eines Unterschusses an Tränklösung bezogen auf das verfügbare Porenvolumen sowie durch die Begrenzung der Einwirkzeit beim Aufziehen der Edelmetalle, teilweise kombiniert mit Mehrfachtränkung lassen sich ebenfalls Schalenkatalysatoren erzielen:

In EP-A-0 565 952 wird offenbart, daß man schalenförmig aufgebaute Pd/Au/K-, Pd/K/Ba- bzw. Pd/K/Cd-Katalysatoren erhält, wenn man eine Lösung entsprechender Metallsalze mittels Ultraschall zerstäubt und dann in einer derart beschränkten Menge und innerhalb einer derart beschränkten Zeit auf die Trägerteilchen aufbringt und mit deren Trocknung beginnt, daß die katalytisch wirksamen Metallsalze nicht bis zum Kern in die Trägerteilchen eindringen können, sondern nur in einen mehr oder weniger großen äußeren Teil, die sogenannte Schale.

Nach EP-A-0 634 214 erhält man Schalenkatalysatoren, indem eine viskose Lösung entsprechender Metallsalze in Form von Tropfen oder Flüssigkeitsstrahlen auf die Trägerteilchen aufgespritzt wird, wobei das Lösungsvolumen bei jedem Bespritzen 5-80% des Porenvolumens der Trägerteilchen beträgt und unmittelbar nach dem Aufspritzen die Trocknung eingeleitet wird.

Gemäß EP-A-0 634 209 erhält man Schalenkatalysatoren, indem die Trägerteilchen mit einer viskosen Lösung entsprechender Metallsalze getränkt werden, wobei das Lösungsvolumen bei jedem Tränkschritt 5-80% des Porenvolumens der Trägerteilchen beträgt und unmittelbar nach jedem Tränkschritt die Trocknung eingeleitet wird.

Gemäß EP-A-0 634 208 erhält man Schalenkatalysatoren, indem man die Trägerteilchen mit einer viskosen Lösung von Salzen der entsprechenden Elemente tränkt und dann trocknet, wobei das Lösungsvolumen beim Tränken mehr als 80% des Porenvolumens der Trägerteilchen beträgt und die Dauer der Tränkung sowie die Zeit bis zum Beginn der Trocknung so kurz gewählt werden, daß nach Ende der Trocknung eine Schale von 5 - 80% des Porenvolumens der Trägerteilchen die genannten Metallsalze enthält.

Über den vorstehend geschilderten, weiteren Stand der Technik bei der Herstellung von Vinylacetat-Katalysatoren hinaus lehrt der engere Stand der Technik auch Methoden zur Herstellung von heterogenen Katalysatoren, die sich dadurch auszeichnen, daß man zunächst über einen Sol-Prozeß Nanopartikel eines oder mehrerer katalytisch aktiver Metalle in einer separaten Verfahrensstufe erzeugt und diese Partikel anschließend auf einem Träger immobilisiert. Der generelle Vorteil der Sol-Verfahren besteht in der erzielbaren hohen Dispersität der Partikel, der engen Verteilung der Partikeldurchmesser und in der Möglichkeit, Legierungsteilchen auszubilden.

Allgemeine Darstellungen dieser Methode finden sich unter anderem in (a) B. C. Gates, L. Guczi, H. Knözinger, Metal Clusters in Catalysis, Elsevier, Amsterdam, 1986; (b) J.S. Bradley in Clusters and Colloids, VCH, Weinheim 1994, S. 459-544;

Bei nanopartikel-gestützten Synthesen von heterogenen Katalysatoren, welche jedoch nicht die Herstellung von Vinylacetat-Katalysatoren betreffen, benutzt man zur Stabilisierung der Metallpartikel sogenannte Stabilisatoren oder Schutzkolloide, insbesondere dann, wenn man weiterverarbeitbare Sole mit einer Metallkonzentration von 0,1 % oder höher benötigt. Stabilisatoren oder Schutzkolloide umhüllen die Metallpartikel und verleihen in vielen Fällen dem Teilchen eine stabile elektrische Ladung. Dadurch wird das Zusammenballen der Partikel verhindert

Als Beispiele für niedermolekulare Stabilisatoren sind unter anderem Sauerstoff-, Phosphor-, Schwefel- oder Stickstoff-haltige Liganden sowie kationische, anionische, betainische oder nichtionische Tenside zu nennen.

Als polymere Schutzkolloide sind unter anderem Polyacrylsäure, Polyvinylalkohol oder Poly-(N-vinylpyrrolidon) eingesetzt worden.

Verfahren zur Erzeugung von Hydrosolen und Organosolen von zum Beispiel Palladium und Gold sind mehrfach beschrieben worden, ebenso daraus hergestellte heterogene Katalysatoren:
Journal of Catalysis 1977, 50, 530-540 offenbart eine Synthese von Pd/Au Partikeln von 2 - 4,5 Nanometer Durchmesser, bei welcher man ausgehend von [Au(en)₂]³⁺- und [Pd(NH₃)₄]²⁺-Salzen zunächst durch lonenaustausch eine Verknüpfung mit den sauren Gruppen eines Kieselsäureträgers herstellt und die fixierten Metallsalze anschließend reduziert.

Catalyst Preparation Science IV, Elsevier Science Publishers, New York 1987, 669-687 offenbart die aufeinanderfolgende Reduktion bzw. die Koreduktion von Palladium- und Goldsalzen unter Verwendung von Natriumcitrat als gleichzeitig Reduktionsmittel und Stabilisator. Dabei wurden Palladium-auf-Gold- oder Gold-auf-Palladium-Partikel bzw. Pd/Au-Legierungspartikel erhalten. Die erhaltenen Kolloide wurden auf Kohleträgem immobilisiert.

Chem. Eur. J. 1996, 2, 1099-1103 beschreibt schalenförmige, bimetallische Pd/Au-Kolloide im Größenbereich von 20-56 Nanometer, die mit Hilfe der Keim-Wachstumsmethode hergestellt wurden. Als Stabilisatoren kamen sulfonierte Triphenylphosphan- und Natriumsulfanilat-Liganden zum Einsatz. Die erhaltenen Partikel wurden auf Titandioxidträgern immobilisiert.

EP-A-0 672 765 offenbart die elektrochemische Herstellung von Pd/Au-Hydrosolen unter Verwendung von kationischen, anionischen, nichtionischen oder betainischen Stabilisatoren. Bei diesem Verfahren erfolgt die Reduktion der Metallsalze an der Kathode einer ungeteilten Elektrolysezelle. Die dort beschriebenen betainstabilisierten Sole erfordern einen etwa 5-fachen molaren Überschuß an Stabilisator bezogen auf das Metallsalz und die Anwendung von organischen Lösemitteln.

DE-A-44 43 701 offenbart Schalenkatalysatoren, die sich als heterogene Katalysatoren eignen sollen. Dabei werden die Partikel in einer bis 200 Nanometer dicken, äußeren Schale des Trägerkorns abgelagert. Ferner wird ein Verfahren zu ihrer Herstellung mittels eines kation-stabilisierten Hydrosols beansprucht.

DE-A-44 43 705 offenbart die Herstellung von tensid-stabilisierten Metallpartikeln als Vorstufen für heterogene Katalysatoren.

DE-A-195 00 366 beschreibt die Herstellung von Pd-Schalenkatalysatoren für Hydrierungen, indem man das Pd als hochverdünntes Sol durch Tränkung oder durch Aufsprühen auf einen Träger aufbringt, wobei eine Schalendicke von weniger als 5000 Nanometer resultiert. Als Stabilisator wird Polyvinylpyrrolidon eingesetzt.

Die Raum-Zeit-Ausbeute und die Lebensdauer von Pd/Au-Katalysatoren bestimmen die Wirtschaftlichkeit des Vinylacetat-Prozesses. Die gegenwärtig besten Katalysatoren erfüllen jedoch die Anforderungen bezüglich des Umsatzes, der Selektivität und des Langzeitverhaltens nur unzureichend. So liegen zum Beispiel die Umsätze in den meisten Fällen nur bei etwa 10 %. Daneben treten die Kosten des Katalysators selbst, die durch den Einsatz großer Mengen an den teuren Edelmetallen Palladium und Gold bestimmt werden.
Bei den bisher bekannten Verfahren zur Herstellung von Katalysatoren für den Vinylacetat-Prozeß erzeugt man die reaktiven Zentren durch Beaufschlagung des Trägers mit einer Lösung von Verbindungen der katalytisch wirksamen Komponenten, beispielsweise durch Tränken mit einer Lösung von Salzen der betreffenden Metalle. Anschließend überführt man die Verbindungen auf dem Träger durch einen chemischen Schritt, beispielsweise durch Fällung oder Reduktion, in die katalytisch wirksamen Komponenten.

Ein wesentlicher Grund für den hohen Edelmetallbedarf beruht auf dem bisher vorwiegend angewandten Tränkverfahren, wobei es zu gewissen nachteiligen Erscheinungen kommen kann, wie im folgenden erläutert werden soll. Häufig kann man beobachten, daß bei der chemischen Umwandlung der Palladium- und Goldverbindungen auf dem Träger die erzielbaren Partikeldurchmesser oberhalb 10-20 Nanometer liegen. Man findet meistens eine relativ breite Verteilung der Partikeldurchmesser von etwa 5 bis 100 Nanometer. Besonders unerwünscht ist die Bildung von größeren Metallpartikeln von einigen 100 bis 200 Nanometer. Dadurch erfolgt eine Erniedrigung der katalytischen Aktivität infolge der Verringerung der spezifischen Metalloberfläche.

Ein weiteres Problem ergibt sich aus der Schwierigkeit, das Palladium und das Gold in homogener Verteilung auf dem Träger abzuscheiden. In der Praxis findet man auf dem Träger häufig goldreiche Domänen neben Bezirken mit ausbalanciertem Pd/Au Verhältnis. Als mögliche Ursachen kommen dabei eine ungleichmäßige Verteilung beim Beladevorgang sowie ein unterschiedliches Verhalten beim Fixiervorgang in Betracht.

Es ist ferner bekannt, daß Edelmetallkatalysatoren auf einem Träger unter den üblichen Betriebsbedingungen, d. h. bei Temperaturen von etwa 150 bis 170°C bei längerer Betriebsdauer einen Aktivitätsverlust erleiden. Um die Aktivitätsverluste zu kompensieren, ist man in der Praxis bis heute gezwungen, die Beaufschlagung des Trägers an Edelmetallen entsprechend zu erhöhen.

Es stellte sich somit die Aufgabe, neue Pd/Au-Katalysatoren mit verbesserten Eigenschaften bezüglich ihrer Partikelgröße, Partikelverteilung, Zusammensetzung und Mikrostruktur der stabilisierenden Matrix zu entwickeln.

Die bisher als Stabilisatoren oder Schutzkolloide verwendeten niedermolekularen oder polymeren Verbindungen besitzen verschiedene Nachteile. Liganden-Stabilisatoren können beispielsweise auf Grund von starken Wechselwirkungen ihrer Donorgruppen mit den aktiven Metallzentren deren katalytische Interaktionen beeinträchtigen. Aus demselben Grund kann auch ihre Abtrennung von dem Metallkern nach dem Aufbringen auf einen Träger schwierig sein.
Polymere Schutzkolloide können die katalytische Wirksamkeit der Metallpartikel beeinträchtigen, so daß ihre Entfernung nach der Fixierung wünschenswert ist. Dies gelingt in vielen Fällen nicht oder nur unvollständig.

Überraschenderweise wurde gefunden, daß Stabilisatoren auf Basis von Polymeren mit Betain-Gruppen diese Nachteile nicht aufweisen.

Gegenstand der Erfindung sind lösliche Nanopartikel, welche Palladium allein oder Palladium zusammen mit Metallen der Nebengruppen Ib und VIIIb des periodischen Systems enthalten und die in Schutzkolloide eingebettet sind, dadurch gekennzeichnet, daß die Schutzkolloide mindestens ein Polymer mit Betain-Gruppen enthalten.

In einer bevorzugten Ausführungsform der Erfindung ist dieses Polymer hydrolytisch abbaubar. Auch der oxidative Abbau des Stabilisators durch Kalzinieren in Luft bei 300 bis 500°C nach der Trägerung ist eine bevorzugte Ausführungsform der Erfindung.

Gegenstand der Erfindung ist ferner ein Verfahren, die vorstehend beschriebenen Nanopartikel in Form von dünnen Schalen auf der Oberfläche oder in oberflächennahen Bereichen eines Formkörpers, Schüttgutes oder Pulvers zu immobilisieren. In einer bevorzugten Ausführungsform der Erfindung wird das Schutzkolloid anschließend durch hydrolytischen Abbau ganz oder teilweise entfernt.

Gegenstand der Erfindung ist weiterhin ein Verfahren zur Herstellung von löslichen Nanopartikeln, welche Palladium allein oder Palladium zusammen mit Metallen der Nebengruppen Ib und VIIIb des periodischen Systems enthalten und die in ein Schutzkolloid eingebettet sind, durch Umsetzung einer Palladiumverbindung allein oder einer Palladiumverbindung zusammen mit weiteren Verbindungen von Metallen der Nebengruppen Ib und VIIIb des periodischen Systems mit einem Reduktionsmittel in Wasser oder einem Lösemittel, dadurch gekennzeichnet, daß man die Reduktion in Gegenwart eines Schutzkolloides enthaltend mindestens ein Polymer, welches Seitenketten mit Betain-Gruppen trägt und gegebenenfalls hydrolytisch abbaubar ist, durchführt oder das Schutzkolloid nach dem Reduktionsschritt zu dem Sol gibt. In einer bevorzugten Ausführungsform der Erfindung wird anschließend das stabilisierte Sol durch Umfällen gereinigt und/oder durch Eindampfen aufkonzentriert.

Ein weiterer Gegenstand der Erfindung sind Katalysatoren für die Herstellung von Vinylacetat, dadurch gekennzeichnet, daß man einen Träger mit einem Sol der vorstehend genannten Nanopartikel durch Tränken, Sprühen, Tauchen, Imprägnieren, Sprühtrocknen, Hicoaten, oder Wrbelschichtcoaten beaufschlagt. In einer bevorzugten Ausführungsform der Erfindung wird das Schutzkolloid anschließend beispielsweise durch Behandlung mit einer Base entfernt.

Die erfindungsgemäß erhältlichen, löslichen Nanopartikel sind Teilchen mit einem Durchmesser von etwa 1 bis 8 Nanometer, vorzugsweise von etwa 2 bis 6 Nanometer bezogen auf den Metallkern. Die Partikel sind in Wasser oder einem organischen Lösemittel löslich, wobei "löslich" auch "solubilisierbar", d. h. Sole bildend, bedeutet. "Sol" ist hier demzufolge dem Begriff Lösung der Nanopartikel" gleichbedeutend.

Bei der Herstellung erhält man die Nanopartikel in Form einer Lösung bzw. eines Sols durch Umsetzung einer geeigneten Verbindung des gewünschten Metalls bzw. der gewünschten Metalle mit einem Reduktionsmittel. Als Ausgangsstoffe kommen lösliche Verbindungen, insbesondere wasserlösliche Salze in Betracht, zum Beispiel Palladium(II)-acetat, Palladium(II)-chlorid, Tetrachlorogold(III)-säure, Hexachloroplatin(IV)-säure-Hydrat, Hexachloroiridium(IV)-säure-Hydrat, Ruthenium(III)-chlorid, Ruthenium(III)-nitrat oder Rhodium(III)-chlorid-Hydrat. Die Metallverbindungen werden in Konzentrationen von etwa 0,1 bis 100 g pro Liter, vorzugsweise von 1 bis 50 g pro Liter bezogen auf das Lösemittel eingesetzt.

Als Reduktionsmittel kommen anorganische Verbindungen in Frage wie beispielsweise Hydrazin, Hydroxylamin, Natriumhypophosphit, Natriumborhydrid oder Wasserstoff. Ferner können auch organische Verbindungen als Reduktionsmittel benützt werden, beispielsweise Formaldehyd, Hydroxymethansulfinsäure Natriumsalz, ein- oder zweiwertige Alkohole wie Ethanol oder Ethylenglykol. Als bevorzugtes Reduktionsmittel werden Hydroxymethansulfinsäure Natriumsalz (Rongalit® ), Hydrazin oder Natriumborhydrid verwendet. Das Reduktionsmittel wird im allgemeinen in stöchiometrischen Mengen bezogen auf die Metallverbindung (en), vorzugsweise aber in einem gewissen Überschuß eingesetzt. Der Überschuß kann beispielsweise 10 bis 100 % betragen.

Das erfindungsgemäße Verfahren wird in Wasser oder in einem Gemisch aus Wasser und einem (oder mehreren), mit Wasser mischbaren organischen Lösemittel(n) oder unter Ausschluß von Wasser in einem organischen Lösemittel durchgeführt. Als organische Lösemittel kommen zum Beispiel in Frage Methanol, Ethanol, Ethylenglykol, N-Methylpyrrolidon, Dimethylformamid oder Dimethylacetamid oder THF. Bevorzugt ist die Herstellung von Solen in Wasser (Hydrosolen) oder in Wasser unter Zusatz von 1 bis 50 Gewichts-%, vorzugsweise von 5 bis 25 % eines organischen Lösemittels.

Erfindungsgemäß verwendet man Polybetaine als Schutzkolloide zur Stabilisierung der Nanopartikel. Sie sind aus einer im wesentlichen unverzweigten Polymethylen-Hauptkette und verschiedenartigen, Betain-Gruppen tragenden Seitenketten aufgebaut.

Die Seitenketten bestehen aus einem Alkylenrest von etwa 2 bis etwa 12 Kohlenstoff-Atomen, vorzugsweise 2 bis 4 Kohlenstoff-Atomen und tragen endständig eine Betain-Gruppe. Die Verknüpfung der Seitenkette mit der Hauptkette erfolgt über eine Carbonsäureester-Gruppe oder über eine Carbonsäureamid-Gruppe. Die Seitenkette kann auch von einem N-haltigen, heterocyclischen Ringsystem, beispielsweise einem Pyridinring gebildet werden, wobei das Stickstoffatom der Betain-Gruppe dem Ringsystem angehört und die Verknüpfung mit der Hauptkette über Kohlenstoff- oder ggf. weitere Stickstoffatome des Ringsystems erfolgt.

Die Betain-Gruppe kann aus einem Carbobetain, -N⁺R¹R²-(-CH₂-)ₙ-CO₂-, einem Phosphobetain, -N⁺R¹R²-(-CH₂-)ₙ-PO₃- oder vorzugsweise aus einem Sulfobetain-N⁺R¹R²-(-CH₂-)ₙ-SO₃- bestehen, wobei R¹ und R² gleiche oder verschiedene Alkylreste von 1 bis 6 Kohlenstoff-Atomen und n = 1, 2 oder 3 bedeuten.

Geeignete Polymere sind beispielsweise
Poly-[N,N-Dimethyl-N-methacryloxyethyl-N-(3-sulfopropyl)-ammonium betain] gemäß Formel 1, 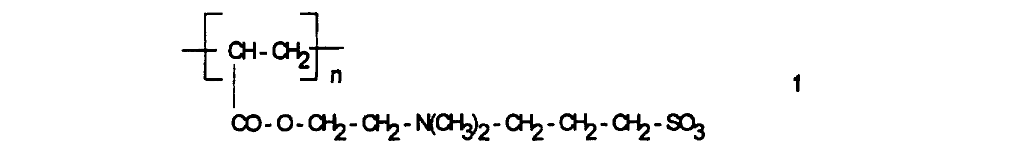
Poly-[N,N-Dimethyl-N-methacrylamidopropyl-N-(3-sulfopropyl)-ammonium betain] gemäß Formel 2, 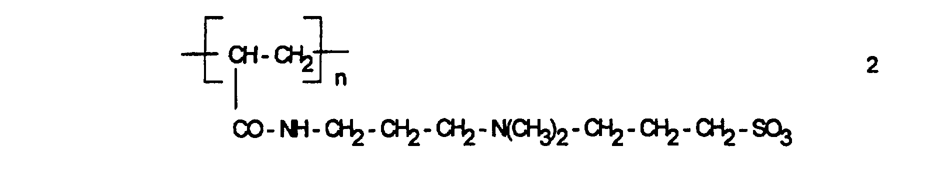
Poly-[1-(3-Sulfopropyl)-2-vinylpyridinium betain] gemäß Formel 3-

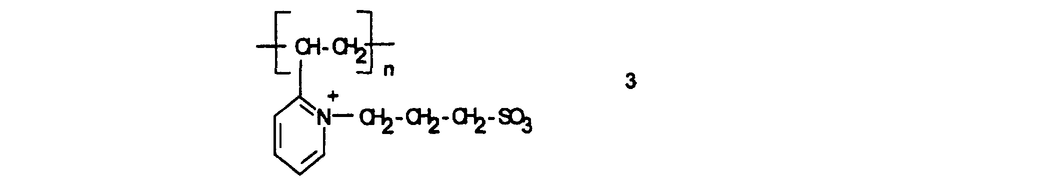

Die vorstehend beschriebenen Polymere werden durch radikalische Polymerisation aus den entsprechenden Monomeren, die kommerziell verfügbar sind, hergestellt. Die Polybetaine weisen Polymerisationsgrade von etwa 50 bis 10000, vorzugsweise von 100 bis 1000 auf.

Man kann auch Copolymere, die aus verschiedenen Monomeren des vorstehend beschriebenen Typs aufgebaut sind, einsetzen.

Ferner können Copolymere eingesetzt werden, die aus Monomeren mit Betain-Gruppen sowie weiteren Monomeren wie beispielsweise Acrylsäure, Acrylsäureester, Acrylsäureamide, Carbonsäurevinylester, Vinyl-alkylether, N-Vinylpyridin, N-Vinylpyrrolidon, N-Vinylcarbonsäureamide aufgebaut sind. Für das erfindungsgemäße Verfahren werden die Polybetaine in Gewichtsmengen von 5 bis 1000 %, vorzugsweise von 20 bis 500 % bezogen auf das Metall bzw. die Metalle eingesetzt.

Die Herstellung der Sole erfolgt bei Temperaturen zwischen 0 und 200°C, vorzugsweise zwischen 20 und 100°C. Es ist zweckmäßig, die Bildung der Sole durch Rühren oder Beschallung mit Ultraschall zu unterstützen.

Die Zugabe der Metallverbindung(en) und des Reduktionsmittels kann im allgemeinen in beliebiger Reihenfolge erfolgen. Bei der bevorzugten Durchführung legt man die Metallverbindung(en) vor und gibt das Reduktionsmittel zu. Setzt man mehrere Metallverbindungen ein, so kann man die Metallverbindungen nacheinander reduzieren, wobei man für beide Schritte dasselbe Reduktionsmittel oder verschiedene Reduktionsmittel einsetzen kann. Beispielsweise kann man zuerst eine Goldverbindung reduzieren und anschließend eine Palladiumverbindung. Die Zugabe des Stabilisators kann vor, während oder nach der Reduktion erfolgen. Falls man das Polybetain erst nach der Reduktion zusetzt, hat die Zugabe vor dem Einsetzen der Zusammenballung zu erfolgen.

Zur Erhöhung der Stabilität kann man ggf. dem Sol noch Elektrolyte zusetzen. Geeignet sind beispielsweise Chloride, Bromide oder lodide. Der Zusatz kann im allgemeinen zwischen 20 und 400 Mol-%, vorzugsweise zwischen 40 und 200 % betragen.

Die in den erfindungsgemäß hergestellten Solen enthaltenen polybetain-stabilisierten Metallpartikel sind neue Verbindungen von relativ einheitlicher Zusammensetzung. Auf Grund von transmissionselektronenmikroskopischen Untersuchungen (TEM) liegen die erhaltenen Partikel in einer sehr engen Größenverteilung vor.

Für die Weiterverarbeitung der Sole zu heterogenen Katalysatoren, d. h. für die Immobilisierung der polybetain-stabilisierten Metallpartikel auf einem festen Träger sind im allgemeinen Metallkonzentrationen von mindestens 10 g/Liter erwünscht. Die erfindungsgemäß erhaltenen Sole können ggf. durch schonendes Abdestillieren von Wasser und/oder des Lösemittels eingeengt werden. Falls es erforderlich ist, können die erfindungsgemäß erhaltenen Sole in an sich bekannter Weise durch Umfällen gereinigt und ggf. gleichzeitig aufkonzentriert werden. Die Fällung der polybetain-stabilisierten Metallpartikel kann durch Zugabe von Aceton oder Isopropanol erfolgen. Die erhaltenen Gele sind in Wasser resolubilisierbar. Die dadurch erzielbaren Metallkonzentrationen liegen zwischen 20 und 50 g/Liter.

Für die Herstellung von Katalysatoren werden die wie vorstehend beschrieben hergestellten wäßrigen Sole auf geformten Katalysatorträgern immobilisiert, wobei bekannte Beschichtungstechniken wie Tränken, Imprägnieren, Tauchen, Sprühen, Sprühtrocknen, Hicoaten, Wirbelschichtcoaten etc. eingesetzt werden können, die bei der Herstellung von konventionellen Trägerkatalysatoren durch Beaufschlagung mit wässrigen (atomardispersen) Salzlösungen Stand der Technik sind. Die Beladung des Trägers mit den Edelmetallsolen kann in einem oder mehreren sequentiellen Schritten erfolgen, wobei zwischen den einzelnen Fixierschritten Trocknungsphasen eingefügt werden können.

Der Träger kann vor, während und/oder nach der Fixierung der Sole noch mit weiteren Aktivatoren, insbesondere Alkali-Acetaten, vorzugsweise K-Acetat, und ggf. Promotoren, beispielsweise Zr-, Ti-, Cd-, Cu-, Ba- und Re-Verbindungen, beladen werden.

Der Stabilisator kann nach der Trägerfixierung auf den Nanoteilchen verbleiben oder ggf. entfernt werden, falls die Gegenwart des Stabilisators die Katalyse stören sollte. Die vollständige oder teilweise Entfernung des Stabilisators kann bei Bedarf z.B. hydrolytisch mit einem Lösungsmittel, thermisch oder oxidativ, z.B. durch Abbrennen in Luft bei 300-500°C erfolgen, sowohl vor dem Einbau des Katalysators in den Reaktor als auch in-situ im Reaktor.

Als Träger werden inerte Materialien, z.B. poröse keramische Materialien wie SiO₂, Al₂O₃, ZrO₂, TiO₂ oder Gemische dieser Oxide in Form von Granulat, Kugeln, Tabletten, Ringen, Sternen, Strängen oder anderen Formkörpern benutzt. Der Durchmesser bzw. die Länge und Dicke der eingesetzten Trägerformkörper liegt im allgemeinen bei 3 bis 9 mm. Die Oberfläche der geformten Träger liegt, gemessen mit der BET-Methode, im allgemeinen bei 10 - 500 m²/g, bevorzugt bei 20 - 250 m²/g. Das Porenvolumen liegt im allgemeinen bei 0.3 bis 1.2 ml/g.

Der Pd-Gehalt der Pd/Au-Katalysatoren beträgt im allgemeinen 0.5 bis 2.0 Gew.-%, vorzugsweise 0.6 bis 1.5 Gew.-%. Der Au-Gehalt der Pd/Au-Katalysatoren beträgt im allgemeinen 0.2 bis 1.0 Gew.-%, vorzugsweise 0.3 bis 0.8 Gew.-%.

Ein bevorzugtes Katalysatorsystem enthält neben Pd und Au noch K-Acetat als Aktivator. Der K-Gehalt beträgt im allgemeinen 0.5 bis 4.0 Gew.-%, vorzugsweise 1.5 bis 3.0 Gew.-%. Die Gewichtsanteile sind auf die Gesamtmasse des Katalysators bezogen.

Als Precursor-Salze für die Aktivatoren und Promotoren sind alle Salze geeignet, die löslich sind und keine für den Katalysator giftigen Bestandteile, wie z.B. Schwefel enthalten. Bevorzugt sind die Acetate und die Chloride. Im Falle der Chloride muß sichergestellt werden, daß die Chloridionen vor dem Einsatz des Katalysators entfernt werden. Dies geschieht durch Auswaschen des beladenen Trägers, z.B. mit Wasser. Eine bevorzugte Ausführungsform besteht in der Nachtränkung des solgetränkten Trägers mit K-Acetat. Vorzugsweise wird nach der erfindungsgemäßen Methode zuerst eine Schale aus Pd/Au erzeugt und danach mit K-Acetat-Lösung nachgetränkt, wobei das K gleichmäßig über den Pelletquerschnitt verteilt wird.

Als Lösungsmittel für die Aktivatoren und Promotoren sind alle Verbindungen geeignet, in denen die gewählten Salze löslich sind und die nach der Imprägnierung leicht wieder durch Trocknung zu entfernen sind. Geeignet sind für die Acetate vor allem unsubstituierte Carbonsäuren, insbesondere Essigsäure. Für die Chloride ist vor allem Wasser geeignet. Die zusätzliche Verwendung eines weiteren Lösungsmittels ist dann zweckmäßig, wenn die Salze in der Essigsäure oder im Wasser nicht genügend löslich sind. Als zusätzliche Lösungsmittel kommen diejenigen in Betracht, die inert und mit Essigsäure bzw. Wasser mischbar sind. Genannt seien als Zusätze für Essigsäure Ketone wie Aceton und Acetylaceton, ferner Ether wie Tetrahydrofuran oder Dioxan, Acetonitril, Dimethylformamid, aber auch Kohlenwasserstoffe wie Benzol.

Man kann mehrere Salze eines Elements aufbringen, aber in einer bevorzugten Ausführungsform bringt man von jedem der drei Elemente genau ein Salz auf. Die notwendigen Salzmengen können in einem Schritt oder durch Mehrfachimprägnierung aufgebracht werden. Die Salze können nach bekannten Methoden wie Tränken, Aufsprühen, Aufdampfen, Tauchen oder Ausfällen auf den Träger aufgebracht werden.

Bei den Pd/Au/K-Katalysatoren hat es sich als vorteilhaft erwiesen, die beiden Edelmetalle in Form einer Schale auf den Träger aufzubringen, d.h. die Edelmetalle sind nur in einer oberflächennahen Zone verteilt, während die weiter innen liegenden Bereiche des Trägerformkörpers nahezu edelmetallfrei sind. Die Schichtdicke dieser katalytisch aktiven Schalen ist im allgemeinen kleiner als 2 mm, bevorzugt kleiner als 0.5 mm. Dünnere Schalen wären für weitere Selektivitätssteigerungen wünschenswert, sind aber mit den konventionellen (d.h. nicht erfindungsgemäßen) Herstellmethoden nicht oder nur sehr schwierig zu erreichen.

Mit Hilfe von Schalenkatalysatoren ist eine selektivere Verfahrensdurchführung möglich als mit Katalysatoren, bei denen die Trägerteilchen bis in den Kern imprägniert ("durchimprägniert") sind, bzw. eine Kapazitätserweiterung.

Dabei bietet es sich an, die Reaktionsbedingungen gegenüber den durchimprägnierten Katalysatoren unverändert zu halten und mehr Vinylacetat pro Reaktorvolumen und Zeit herzustellen. Dadurch wird die Aufarbeitung des erhaltenen Rohvinylacetats erleichtert, da der Vinylacetatgehalt im Reaktorausgangsgas höher ist, was weiterhin zu einer Energieerspamis im Aufarbeitungsteil führt. Geeignete Aufarbeitungen werden z.B. in US-5 066 365, DE-A-34 22 575, DE-A-34 08 239, DE-A-29 45 913, DE-A-26 10 624, US-3 840 590 beschrieben. Hält man dagegen die Anlagenkapazität konstant, so kann man die Reaktionstemperatur senken und dadurch bei gleicher Gesamtleistung die Reaktion selektiver durchführen, wobei Edukte eingespart werden. Dabei wird auch die Menge des als Nebenprodukt entstehenden und daher auszuschleusenden Kohlendioxids und der mit dieser Ausschleusung verbundene Verlust an mitgeschlepptem Ethylen geringer. Darüberhinaus führt diese Fahrweise zu einer Verlängerung der Katalysatorstandzeit.

Die erfindungsgemäße Methode der Trägerbeschichtung mit Solen erlaubt vorteilhafterweise die Ausbildung auch dünner Schalen mit Schalendicken kleiner als 0.5 mm und mit einer relativ scharf ausgebildeten Grenzfläche zum unbelegten Innenbereich der Formkörper. Je nach Teilchengröße, Stabilisator und Porenstruktur des Trägers sind auch Schalendicken kleiner als 0.1 mm erreichbar.

Ein wesentlicher Vorteil der Solbeschichtungstechnik besteht darin, daß die Edelmetallkomponenten nach Aufbringen des Sols auf dem Träger im wesentlichen bereits im reduzierten Zustand vorliegen. Damit entfällt eine Reduktion der Edelmetalle bei hohen Temperaturen, die im allgemeinen ein Zusammensintern der Edelmetalle bewirkt und dadurch die katalytische Oberfläche verringert.

Die Herstellung des Vinylacetats erfolgt im allgemeinen durch Leiten von Essigsäure, Ethylen und Sauerstoff oder Sauerstoff enthaltenden Gasen bei Temperaturen von 100 bis 220°C, vorzugsweise 120 bis 200°C, und bei Drucken von 1 bis 25 bar, vorzugsweise 1 bis 20 bar, über den fertigen Katalysator, wobei nicht umgesetzte Komponenten im Kreis geführt werden können. Zweckmäßig hält man die Sauerstoffkonzentration unter 10 Vol.-% (bezogen auf das essigsäurefreie Gasgemisch). Unter Umständen ist jedoch auch eine Verdünnung mit inerten Gasen wie Stickstoff oder Kohlendioxid vorteilhaft. Besonders Kohlendioxid eignet sich zur Verdünnung, da es in geringen Mengen während der Reaktion gebildet wird.

### Beispiel 1

Man löst in einem 500ml-Erlenmeyerkolben 0,673 g ( 3,0 mMol) Palladium(II)acetat, 0,255 g (6,0 mMol) Lithiumchlorid in 50 ml heißem, entsalzten Wasser und fügt weitere 250 ml Wasser hinzu. Eine zweite Lösung stellt man durch Auflösen von 0,50 g Poly-[N,N-dimethyl-N-methacrylamidoproyl-N-(3-sulfopropyl)-ammoniumbetain] und 0,389 g (3,33 mMol) Hydroxymethansulfinsäure, Natriumsalz (Rongalit® ) in 20 ml entsalztem Wasser her. Man vereinigt die beiden Lösungen bei 20-25°C unter kräftigem Umrühren in einem Guß. Das Gemisch der Lösungen wird sofort dunkel. Man läßt 15 h bei Raumtemperatur stehen und engt das gebildete Hydrosol am Rotationsverdampfer unter vermindertem Druck bei einer Badtemperatur von 40°C bis auf ein Volumen von 50 ml ein. Man erhält ein dunkelbraunes, mindestens über 5 Tage stabiles Hydrosol.

Aus der TEM-Analyse (Transmissionselektronenmikroskop mit angeschlossenem EDX-System, Fabrikat: Philips CM 30) wurde eine Partikelgröße von 2-3 Nanometer ermittelt.

### Beispiel 2

Man bereitet in einem 2L-Erlenmeyerkolben eine Lösung 1 durch Auflösen von 1,50 g (6,67 mMol) Palladium(II)acetat, 0,57 g (13,4 mMol) Lithiumchlorid in 100 ml heißem, entsalzten Wasser und Hinzufügen von weiteren 600 ml Wasser. Lösung 2 stellt man durch Auflösen von 0,68g (1,72 mMol) Tetrachlorogoldsäure-Hydrat, HAuCl₄ x H₂O, in 20 ml entsalzten Wasser her. Lösung 3 stellt man durch Auflösen von 2,00 g Poly-[N,N-dimethyl-N-methacryloxyethyl-N- (3-sulfopropyl)-ammoniumbetain] und 1,31 g (11,1 mMol) Hydroxymethansulfinsäure, Natriumsalz (Rongalit® ) in 100 ml entsalztem Wasser her. Man vereinigt zunächst die Lösung 1 und Lösung 2 und fügt bei 20-25°C unter kräftigem Umrühren Lösung 3 in einem Guß hinzu. Das Gemisch der Lösungen wird sofort dunkel. Man läßt 15 h bei Raumtemperatur stehen und engt das gebildete Hydrosol am Rotationsverdampfer unter vermindertem Druck bei einer Badtemperatur von 40°C bis auf ein Volumen von 100 ml ein. Man erhält ein dunkel-rotbraunes, mindestens über 5 Tage stabiles Hydrosol.

Aus der TEM-Analyse (Transmissionselektronenmikroskop mit angeschlossenem EDX-System, Fabrikat: Philips CM 30) wurde eine Partikelgröße von 2-5 Nanometer ermittelt. Die EDX-Messung ergab ein Atomverhältnis Pd/Au von 4:1 (Mittelwert mehrerer Messungen; es wurden jeweils 3-5 nebeneinander liegende Cluster erfaßt).

### Beispiel 3

Man bereitet Lösung 1 und Lösung 2 wie in Beispiel 2 beschrieben. Lösung 3 stellt man durch Auflösen von 2,00 g Poly-[N,N-dimethyl-N-methacrylamidopropyl-N- (3-sulfopropyl)-ammoniumbetain] und 1,31 g (11,1 mMol) Hydroxymethansulfinsäure, Natriumsalz (Rongalit® ) in 100 ml entsalztem Wasser her. Man verfährt im übrigen wie in Beispiel 2 beschrieben und erhält ein dunkel-rotbraunes, mindestens über 5 Tage stabiles Hydrosol.

Aus der TEM-Analyse (Transmissionselektronenmikroskop mit angeschlossenem EDX-System, Fabrikat: Philips CM 30) wurde eine Partikelgröße von 3-8 Nanometer ermittelt. Die EDX-Messung ergab ein Atomverhältnis Pd/Au von 3,55 :1 (Mittelwert mehrerer Messungen; es wurden jeweils 3-5 nebeneinander liegende Cluster erfaßt).

### Beispiel 4

Man bereitet Lösung 1 durch Auflösen von 1,50 g (6,67 mMol)Palladium(II)acetat, 0,57 g (13,4 mMol) Lithiumchlorid in 100 ml heißem, entsalzten Wasser und Hinzufügen von weiteren 600 ml Wasser. Man bereitet Lösung 2 wie in Beispiel 2 beschrieben. Lösung 3 stellt man durch Auflösen von 1,00 g Poly-[1-(3-sulfopropyl)-2-vinylpyridinium betain] und 1,31 g (11,1 mMol) Hydroxymethansulfinsäure, Natriumsalz (Rongalit® ) in 100 ml entsalztem Wasser her. Man verfährt im übrigen wie in Beispiel 2 beschrieben und erhält ein dunkel-rotbraunes, mindestens über 5 Tage stabiles Hydrosol.

Aus der TEM-Analyse (Transmissionselektronenmikroskop mit angeschlossenem EDX-System, Fabrikat: Philips CM 30) wurde eine Partikelgröße von 2-8 Nanometer ermittelt. Die EDX-Messung ergab ein Atomverhältnis Pd/Au von 4 :1 (Mittelwert mehrerer Messungen; es wurden jeweils 3-5 nebeneinander liegende Cluster erfaßt).

### Beispiel 5

Man löst 2,4 g Polyvinylalkohol (22000 von Fluka) unter kurzem Aufkochen in 1200 ml Wasser und läßt auf RT abkühlen. Eine zweite Lösung wird hergestellt durch Lösen von 3 g (13,33 mMol) Palladium(II)acetat, 1,27 g (30,0 mMol) Lithiumchlorid in 200 ml heißem, entsalztem Wasser. Die Lösung wird filtriert und mit PVA-Lösung gewaschen.
Eine dritte Lösung stellt man her durch Auflösen von 1,36 g Tetrachlorogoldsäure Hydrat (3,44 mMol) in 40 ml Wasser.

Die drei vorstehend angesetzten Lösungen werden in einem 2l-Erlenmeyerkolben zusammengegeben. Es entsteht eine klare dunkel-rotbraune Lösung, in der alle Stoffe gelöst vorliegen. Nun werden 2,62g (22,2 mMol) Hydroxymethansulfinsäure Natriumsalz Dihydrat (Rongalit® ) in 40 ml entsalztem Wasser bei 20-25°C unter kräftigem Umrühren in einem Guß zugegeben. Das Gemisch der Lösungen wird sofort dunkel. Man läßt 15 h bei Raumtemperatur stehen und engt das gebildete Hydrosol am Rotationsverdampfer unter vermindertem Druck bei einer Badtemperatur von 40°C bis auf 250 g ein.

### Beispiel 6:

Man löst in einem 2l-Erlenmeyerkolben 3 g (13,33 mMol) Palladium(II)acetat, 1,27 g (30 mMol) Lithiumchlorid in 200 ml heißem, entsalzten Wasser. Die Lösung wird filtriert und auf 1200 ml verdünnt. Eine zweite Lösung stellt man her durch Auflösen von 1,36 g Tetrachlorogoldsäure Hydrat (3,44 mMol) in 40 ml Wasser.

Die 2 vorstehend angesetzten Lösungen werden zusammengegeben. Man erhält eine klare dunkel-rotbraune Lösung. Nun wird eine Lösung aus 2 g Poly-[N,N-dimethyl-N-methacryloxyethyl-N-(3-sulfopropy)ammoniumbetain] und 2,62 g (22,2 mMol) Hydroxymethansulfinsäure Natriumsalz Dihydrat (Rongalit® ) in 40 ml entsalztem Wasser bei 20-25°C unter kräftigem Umrühren in einem Guß zugegeben. Das Gemisch der Lösungen wird sofort dunkel. Man läßt 15 h bei Raumtemperatur stehen und engt das gebildete Hydrosol am Rotationsverdampfer unter vermindertem Druck bei einer Badtemperatur von 40°C bis auf 250 g ein.

### Beispiel 7:

Man löst in einem 2l-Erlenmeyerkolben 3 g (13,33 mMol) Palladium(II)acetat, 1,27 g (30 mMol) Lithiumchlorid in 200 ml heißem, entsalzten Wasser. Die Lösung wird filtriert und auf 1200 ml verdünnt. Eine zweite Lösung stellt man her durch Auflösen von 1,36 g Tetrachlorogoldsäure Hydrat (3,44 mMol) in 40 ml Wasser.

Die zwei vorstehend angesetzten Lösungen werden zusammengegeben. Man erhält eine klare dunkel-rotbraune Lösung. Nun wird eine Lösung aus 2 g Poly-[N,N-dimethyl-N-methacrylamidopropyl-N-(3-sulfopropyl)-ammoniumbetain] und 2,62 g (22,2 mMol) Hydroxymethansulfinsäure-Natriumsalz-Dihydrat (Rongalit® ) in 40 ml entsalztem Wasser bei 20-25°C unter kräftigem Umrühren in einem Guß zugegeben. Das Gemisch der Lösungen wird sofort dunkel. Man läßt 15 h bei Raumtemperatur stehen und engt das gebildete Hydrosol am Rotationsverdampfer unter vermindertem Druck bei einer Badtemperatur von 40°C bis auf 250 g ein.

### Beispiel 8:

Die Ausgangslösung aus Beispiel 5 wird mit einer Konzentration 1.41 g Pd und 0.68 g Au auf 250 ml Lösung verwendet. 100 ml der Ausgangslösung werden abgenommen und auf 300 ml mit Wasser verdünnt und mit einer Sprühpistole (Düse 0.5 mm) mit N2-Treibgas auf 100 g vorgelegte Perlen (Siliperl AF125, Siebfraktion 4mm Durchmesser) aufgesprüht Es wird im Soxhlet chloridfrei gewaschen und über Nacht bei 100°C getrocknet. Danach wird mit K-Acetat getränkt, indem eine Lösung aus 6 g K-Acetat in 72 ml Wasser (entsprechend der Wasseraufnahme der Perlen) auf 100ml Perlen gegeben wird. Unter ständigem Drehen wird für 1h vermengt und über Nacht im Trockenschrank bei 120°C getrocknet.

### Beispiel 9:

60 g Siliperl AF125 (Fa. Engelhard) werden mit 75 ml der Ausgangslösung aus Beispiel 6 (entspricht 0.63g Pd und 0.19g Au, stabilisiert mit polymerem Sulfobetain) getränkt. Man läßt unter ständigem Drehen einziehen. Man trocknet über Nacht im Trockenschrank bei 110°C. Man wäscht einen Tag lang mit 41 Wasser und trocknet erneut im Trockenschrank über Nacht bei 110°C.

4.8g Kaliumacetat werden in 60ml Wasser gelöst (entsprechend der Wasseraufnahme des Trägers) und zusammen zu den Kugeln gegeben. Unter ständigem Drehen läßt man einziehen. Es wird über Nacht bei 110°C getrocknet.

### Beispiel 10:

60 g Siliperl AF125 werden mit 75ml der Ausgangslösung aus Beispiel 7 (entspricht 0.63g Pd und 0.19g Au, stabilisiert mit polymerem Sulfobetain) getränkt. Man läßt unter ständigem Drehen einziehen. Man trocknet über Nacht im Trockenschrank bei 110°C. Es wird einen Tag lang mit 41 Wasser gewaschen und erneut über Nacht im Trockenschrank bei 110°C getrocknet. 4.8g Kaliumacetat werden in 60 ml Wasser (entsprechend der Wasseraufnahme des Trägers) gelöst und zusammen zu den Kugeln gegeben. Man läßt unter ständigem Drehen einziehen. Es wird über Nacht bei 110°C getrocknet.

### Beispiel 11:

20g Katalysator aus Beispiel 9 werden in synthetischer Luft bei 350°C für 4h getempert. Man läßt abkühlen und reduziert anschließend mit Ethylen für 2h bei 150°C. Nach dem Abkühlen wird bei RT für 10 Minuten mit 1% Sauerstoff passiviert und der passivierte Katalysator bis zur Messung gelagert.

### Beispiel 12:

Es wurde ebenso verfahren wie in Beispiel 11 mit dem einzigen Unterschied, daß bei 450°C calciniert wurde.

### Beispiel 13:

Es wurde ebenso verfahren wie in Beispiel 11 mit dem einzigen Unterschied, daß bei 550°C calciniert wurde.
Reaktortests für die Gasphasenoxidation von Ethylen und Essigsäure zu Vinylacetat:
Die Katalysatoren wurden in einem Festbett-Rohrreaktor mit 2 cm Rohrduchmesser getestet. Der Reaktor wird von außen mit einer Öl-Mantelheizung temperiert. Es werden 15 ml der Katalysator-Formkörper vorgelegt. Das Reaktorvolumen vor und hinter der Katalysatorschüttung wird mit Glaskugeln aufgefüllt Die Testapparatur wird von einem Prozeßleitsystem gesteuert und kontinuierlich betrieben.
Der Katalysator wird zunächst aktiviert und dann unter konstanten Reaktionsbedingungen getestet. Die Aktivierung besteht aus mehreren Schritten:
Aufheizen unter N₂, Zugabe von Ethylen, Druckerhöhung, Zugabe Essigsäure, Halten der Bedingungen, Zugabe Sauerstoff.
Die Reaktionsbedingungen bei den Tests sind 160-170°C Reaktionstemperatur, 8-9 bar Überdruck. Der Feed setzt sich zusammen aus 64.5 Vol.-% Ethylen, 16.1 Vol.-% N₂, 14.3 Vol.-% Essigsäure und 5.1 Vol.-% O₂. Eine Vollanalyse des Reaktoraustrags wird direkt am Reaktorausgang mittels on-line GC (2 Säulen-Schaltung) durchgeführt.
Die Reaktorergebnisse finden sich in der nachfolgenden Tabelle 1 (VAM = Vinyl-Acetat Monomer, Fl.-% = GC-Flächen-%):

**Tabelle 1**

| | | | GC-Analyse des Reaktoraustrags (in Flächen-%) | | | | | | |
|---|---|---|---|---|---|---|---|---|---|
| Beispiel Nr. | T (°C) | p (bar) | CO₂ | C₂H₄ | O₂ | N₂ | H₂O | VAM | Essigsäure |
| 8 | 160 | 9 | 0.01 | | | | | 0.07 | |
| 9 | 160 | 9 | 0.01 | | | | | 0.05 | |
| 10 | 160 | 9 | 0.01 | | | | | 0.17 | |

| in Luft nachcalciniert zum Abbrennen des Stabilisators: | | | | | | | | | |
|---|---|---|---|---|---|---|---|---|---|
| 11 | 160 | 9 | 0.02 | | | | | 0.22 | |
| 12 | 160 | 9 | 0.02 | | | | | 0.25 | |
| 13 | 160 | 9 | 0.0 | | | | | 0.0 | (völlig inaktiv) |

Anmerkung: Die Konzentrationen der anderen Gasen (C₂H₄, O₂, N₂, Essigsäure) entsprechen etwa den Eingangswerten, etwaige Veränderungen liegen innerhalb der Schwankungsbreite der on-line GC-Analytik, so daß in der Tabelle keine Werte angegeben werden.

## Patentansprüche

1. Lösliche Nanopartikel, welche Palladium allein oder Palladium zusammen mit Metallen der Nebengruppen 1b und VIIIb des periodischen Systems enthalten und die in Schutzkolloide eingebettet sind, dadurch gekennzeichnet, daß die Schutzkolloide mindestens ein Polymer mit Betain-Gruppen enthalten.

2. Lösliche Nanopartikel nach Anspruch 1, dadurch gekennzeichnet, daß sie mindestens ein Polymer mit Betain-Gruppen enthalten, das hydrolytisch abbaubar ist.

3. Lösliche Nanopartikel nach Anspruch 1 oder 2, dadurch gekennzeichnet, daß sie Durchmesser von 1 bis 8 nm aufweisen.

4. Lösliche Nanopartikel nach Anspruch 1 oder 2, dadurch gekennzeichnet, daß sie Durchmesser von 2 bis 6 nm aufweisen.

5. Lösliche Nanopartikel nach einem oder mehreren der Ansprüche 1 bis 4, dadurch gekennzeichnet, daß sie mindestens ein Polymer mit Betain-Gruppen enthalten, das eine Seitenkette trägt, die aus einem Alkylenrest mit 2 bis 12 Kohlenstoffatomen besteht.

6. Lösliche Nanopartikel nach einem oder mehreren der Ansprüche 1 bis 4, dadurch gekennzeichnet, daß sie mindestens ein Polymer mit Betain-Gruppen enthalten, das eine Seitenkette trägt, die aus einem Alkylenrest mit 2 bis 4 Kohlenstoffatomen besteht.

7. Lösliche Nanopartikel nach einem oder mehreren der Ansprüche 1 bis 6, dadurch gekennzeichnet, daß es sich bei dem Betain um ein Carbobetain der Formel -N⁺R¹R²-(-CH₂-)ₙ-CO₂-, ein Phosphobetain der Formel -N⁺R¹R²-(-CH₂-)ₙ-PO₃- oder um ein Sulfobetain der Formel -N⁺R¹R²-(-CH₂-)ₙ-SO₃- handelt, wobei R¹ und R² unabhängig voneinander gleich oder verschieden sein können, und Alkylreste von 1 bis 6 Kohlenstoffatome bedeuten, und n 1, 2 oder 3 bedeutet.

8. Lösliche Nanopartikel nach einem oder mehreren der Ansprüche 1 bis 7, dadurch gekennzeichnet, daß die Schutzkolloide Verbindungen der Formeln 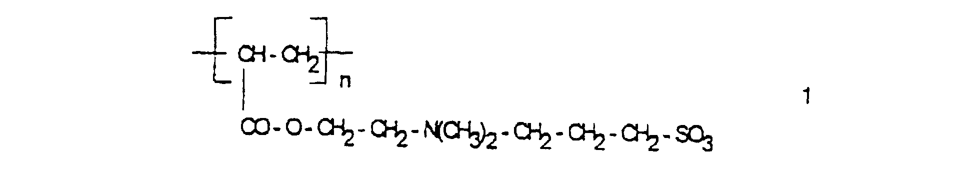 oder 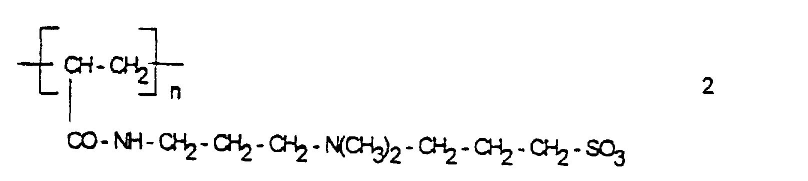 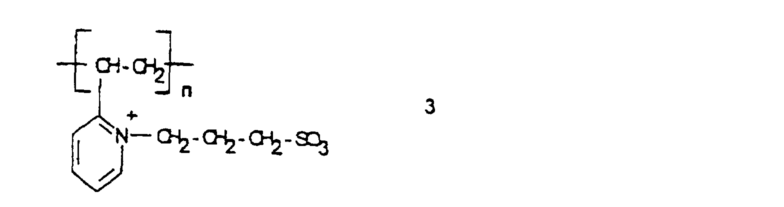 sind, worin n 1, 2 oder 3 bedeutet.

9. Lösliche Nanopartikel nach einem oder mehreren der Ansprüche 1 bis 8, dadurch gekennzeichnet, daß sie mindestens ein Polymer mit Betain-Gruppen enthalten, das einen Polymerisationsgrad von 50 bis 10000 aufweist.

10. Lösliche Nanopartikel nach einem oder mehreren der Ansprüche 1 bis 8, dadurch gekennzeichnet, daß sie mindestens ein Polymer mit Betain-Gruppen enthalten, das einen Polymerisationsgrad von 100 bis 1000 aufweist.

11. Lösliche Nanopartikel nach einem oder mehreren der Ansprüche 1 bis 10, dadurch gekennzeichnet, daß sie ein Polymer enthalten, das neben Monomeren, die Betain-Gruppen enthalten, auch Monomere ausgewählt aus der Gruppe Acrylsäure, Acrylsäureester, Acrylsäureamide, Carbonsäurevinylester, Vinyl-alkylether, N-Vinylpyridin, N-Vinylpyrrolidon, N-Vinylcarbonsäureamide enthält.

12. Verfahren zur Herstellung von lösliche Nanopartikeln nach einem oder mehreren der Ansprüche 1 bis 11 durch Umsetzung einer Palladiumverbindung allein oder einer Palladiumverbindung zusammen mit weiteren Verbindungen von Metaiten der Nebengruppen Ib und VIIIb des periodischen Systems mit einem Reduktionsmittel in Wasser oder einem Lösemittel, dadurch gekennzeichnet, daß man die Reduktion in Gegenwart eines Schutzkolloides enthaltend mindestens ein Polymer, welches Seitenketten mit einer Betain-Gruppe trägt, durchführt oder das Schutzkolloid nach dem Reduktionsschritt zu dem entstehenden Sol gibt.

13. Verfahren nach Anspruch 12, dadurch gekennzeichnet, daß das Sol durch Umfällen gereinigt oder durch Eindampfen aufkonzentriert wird.

14. Verfahren nach Anspruch 12 oder 13, dadurch gekennzeichnet, daß die Ausgangsstoffe für die Herstellung der löslichen Nanopartikel lösliche Verbindungen sind.

15. Verfahren nach Anspruch 12 bis 13, dadurch gekennzeichnet, daß die Ausgangsstoffe für die Herstellung der löslichen Nanopartikel Palladium(II)-acetat, Palladium(II)-chlorid, Tetrachlorogold(III)-säure, Hexachloroplatin(IV)-säure-Hydrat, Hexachloroiridium(IV)-säure-Hydrat, Ruthenium(III)-chlorid, Ruthenium(III)-nitrat oder Rhodium(III)-chlorid-Hydrat sind.

16. Verfahren nach einem oder mehreren der Ansprüche 12 bis 15, dadurch gekennzeichnet, daß die Ausgangsstoffe für die Herstellung der löslichen Nanopartikel in Konzentrationen von 0,1 bis 100 g pro Liter, bezogen auf das Lösemittel, eingesetzt werden.

17. Verfahren nach einem oder mehreren der Ansprüche 12 bis 15, dadurch gekennzeichnet, daß die Ausgangsstoffe für die Herstellung der löslichen Nanopartikel in Konzentrationen von 1 bis 50 g pro Liter, bezogen auf das Lösemittel, eingesetzt werden.

18. Verfahren nach einem oder mehreren der Ansprüche 12 bis 17, dadurch gekennzeichnet, daß als Reduktionsmittel anorganische Verbindungen oder organische Verbindungen verwendet werden.

19. Verfahren nach einem oder mehreren der Ansprüche 12 bis 17, dadurch gekennzeichnet, daß als Reduktionsmittel Hydrazin, Hydroxylamin, Natriumhypophosphit, Natriumborhydrid, Wasserstoff, Formaldehyd, Hydroxymethansulfinsäure-Natriumsalz oder ein- oder zweiwertige Alkohole wie Ethanol oder Ethylenglykol, verwendet werden.

20. Verfahren nach einem oder mehreren der Ansprüche 12 bis 19, dadurch gekennzeichnet, daß das Reduktionsmittel in stöchiometrischen Mengen, bezogen auf die Metallverbindung(en), verwendet wird.

21. Verfahren nach einem oder mehreren der Ansprüche 12 bis 19, dadurch gekennzeichnet, daß das Reduktionsmittel im Überschuß von 10 bis 100%, bezogen auf die Metallverbindung(en), verwendet wird.

22. Verfahren nach einem oder mehreren der Ansprüche 12 bis 21, dadurch gekennzeichnet, daß das Lösemittel Methanol, Ethanol, Ethylengykol, N-Methylpyrrolidon, Dimethylformamid, Dimethylacetamid oder Tetrahydrofuran, oder eine Mischung dieser Stoffe mit Wasser ist.

23. Verfahren nach einem oder mehreren der Ansprüche 12 bis 22, dadurch gekennzeichnet, daß es bei Temperaturen von 0 bis 200°C durchgeführt wird.

24. Verfahren nach einem oder mehreren der Ansprüche 12 bis 22, dadurch gekennzeichnet, daß es bei Temperaturen von 20 bis 100°C durchgeführt wird.

25. Sol, herstellbar nach dem Verfahren nach einem oder mehreren der Ansprüche 12 bis 24, dadurch gekennzeichnet, daß es Elektrolyte enthält.

26. Sol, herstellbar nach dem Verfahren nach einem oder mehreren der Ansprüche 12 bis 24, dadurch gekennzeichnet, daß es Chloride, Bromide oder lodide als Elektrolyte enthält.

27. Katalysatoren für die Herstellung von Vinylacetat, dadurch gekennzeichnet, daß man einen Katalysatorträger mit einem Sol der Nanopartikel nach einem der Ansprüche 1 bis 11 durch Tränken, Sprühen, Tauchen, Imprägnieren, Sprühtrocknen, Hicoaten, oder Wirbelschichtcoaten beaufschlagt.

28. Katalysatoren nach Anspruch 27, dadurch gekennzeichnet, daß man das Schutzkolloid durch Behandlung mit einer Base entfernt.

29. Katalysatoren nach Anspruch 27 oder 28, dadurch gekennzeichnet, daß sie zusätzlich ein oder mehrere Metalle ausgewählt aus der Gruppe Zr, Ti, Ba und Re enthalten.

30. Katalysatoren nach Anspruch 27 oder 29, dadurch gekennzeichnet, daß man das Schutzkolloid durch oxidativen Abbau durch Calcinieren in Luft bei 300 - 500°C entfernt.

## Claims

1. Soluble nanoparticles which comprises palladium alone or palladium together with metals of subgroups Ib and VIIIb of the periodic table and which are embedded in protective colloids, wherein the protective colloids comprises at least one polymer having betaine groups.

2. Soluble nanoparticles as claimed in claim 1, which comprises at least one polymer which has betaine groups and can be degraded by hydrolysis.

3. Soluble nanoparticles as claimed in claim 1 or 2, which have diameters of from 1 to 8 nm.

4. Soluble nanoparticles as claimed in claim 1 or 2, which have diameters of from 2 to 6 nm.

5. Soluble nanoparticles as claimed in one or more of claims 1 to 4, which comprise at least one polymer which has betaine groups and which has a side chain which consists of an alkylene radical having 2 to 12 carbon atoms.

6. Soluble nanoparticles as claimed in one or more of claims 1 to 4, which comprise at least one polymer which has betaine groups and which has a side chain which consists of an alkylene radical having 2 to 4 carbon atoms.

7. Soluble nanoparticles as claimed in one or more of claims 1 to 6, wherein the betaine is a carbobetaine of the formula -N⁺R¹R²-(-CH₂-)ₙ-CO₂-, a phosphobetaine of the formula -N⁺R¹R²-(-CH₂-)ₙ-PO₃- or a sulfobetaine of the formula -N⁺R¹R²-(-CH₂-)ₙ-SO₃-, where R¹ and R² independently of one another can be identical or different and are alkyl radicals of 1 to 6 carbon atoms, and n is 1, 2 or 3.

8. Soluble nanoparticles as claimed in one or more of claims 1 to 7, wherein the protective colloids are compounds of the formulae 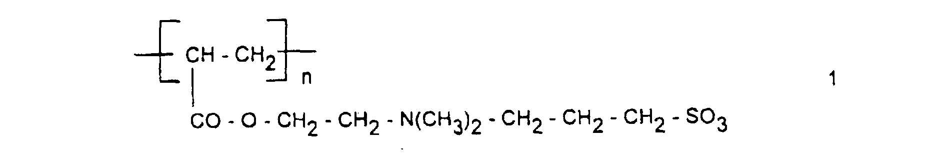 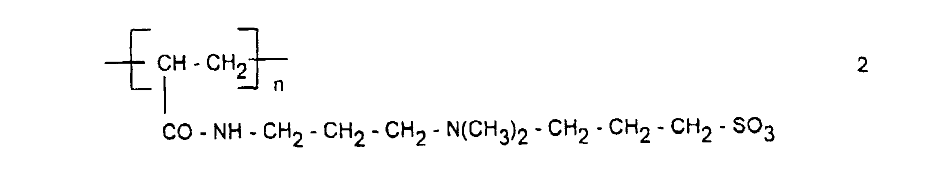 or 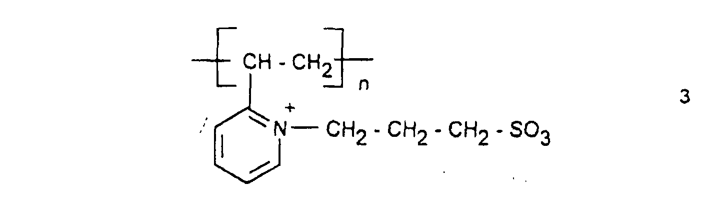 in which n is 1, 2 or 3.

9. Soluble nanoparticles as claimed in one or more of claims 1 to 8, which comprise at least one polymer which has betaine groups and which has a degree of polymerization of from 50 to 10,000.

10. Soluble nanoparticles as claimed in one or more of claims 1 to 8, which comprise at least one polymer which has betaine groups and which has a degree of polymerization of from 100 to 1,000.

11. Soluble nanoparticles as claimed in one or more of claims 1 to 10, which comprise a polymer which comprises not only monomers which comprise betaine groups but also monomers selected from the group of acrylic acid, acrylic esters, acrylamides, vinyl carboxylates, vinyl alkyl ethers, N-vinylpyridine, N-vinylpyrrolidone, N-vinylcarboxamides.

12. A process for the preparation of soluble nanoparticles as claimed in one or more of claims 1 to 11 by reacting a palladium compound alone or a palladium compound together with other compounds of metals of subgroups Ib and VIIIb of the periodic table with a reducing agent in water or a solvent, wherein the reduction is carried out in the presence of a protective colloid comprising at least one polymer which has side chains with a betaine group, or the protective colloid is added to the resulting sol after the reduction step.

13. The process as claimed in claim 12, wherein the sol is purified by reprecipitation or concentrated by evaporation.

14. The process as claimed in claim 12 or 13, wherein the starting materials for preparing the soluble nanoparticles are soluble compounds.

15. The process as claimed in claim 12 to 13, wherein the starting materials for preparing the soluble nanoparticles are palladium(II) acetate, palladium(II) chloride, tetrachloroauric(III) acid, hexachloroplatinic(IV) acid hydrate, hexachloroiridic(IV) acid hydrate, ruthenium(III) chloride, ruthenium(III) nitrate or rhodium(III) chloride hydrate.

16. The process as claimed in one or more of claims 12 to 15, wherein the starting materials for preparing the soluble nanoparticles are employed in concentrations of 0.1 to 100 g per liter, based on the solvent.

17. The process as claimed in one or more of claims 12 to 15, wherein the starting materials for preparing the soluble nanoparticles are employed in concentrations of from 1 to 50 g per liter, based on the solvent.

18. The process as claimed in one or more of claims 12 to 17, wherein the reducting agents used are inorganic compounds or organic compounds.

19. The process as claimed in one or more of claims 12 to 17, wherein the reducting agents used are hydrazine, hydroxylamine, sodium hypophosphite, sodium borohydride, hydrogen, formaldehyde, sodium hydroxymethanesulfinate or monohydric or dihydric alcohols such as ethanol or ethylene glycol.

20. The process as claimed in one or more of claims 12 to 19, wherein the reducting agent is used in stoichiometric amounts in relation to the metal compound(s).

21. The process as claimed in one or more of claims 12 to 19, wherein the reducting agent is used in an excess of from 10 to 100 % in relation to the metal compound(s).

22. The process as claimed in one or more of claims 12 to 21, wherein the solvent is methanol, ethanol, ethylene glycol, N-methylpyrrolidone, dimethylformamide, dimethylacetamide or tetrahydrofuran, or a mixture of these substances with water.

23. The process as claimed in one or more of claims 12 to 22, which is carried out at temperatures of from 0 to 200°C.

24. The process as claimed in one or more of claims 12 to 22, which is carried out at temperatures of from 20 to 100°C.

25. A sol prepared by the process as claimed in one or more of claims 12 to 24, which comprises electrolytes.

26. A sol prepared by the process as claimed in one or more of claims 12 to 24, which comprises chlorides, bromides or iodides.

27. A catalyst for the preparation of vinyl acetate, wherein a catalyst carrier is loaded with a sol of the nanoparticles as claimed in any of claims 1 to 11 by impregnation, spraying, dipping, imbibition, spray drying, Hicoating or fluidized bed coating.

28. A catalyst as claimed in claim 27, wherein the protective colloid is removed by treatment with a base.

29. A catalyst as claimed in claim 27 or 28, which additionally comprises one or more metals selected from the group of Zr, Ti, Ba and Re.

30. A catalyst as claimed in claim 27 or 29, wherein the protective colloid is removed by oxidative degradation by calcination in air at 300-500°C.

## Revendications

1. Nanoparticules solubles, qui contiennent du palladium seul ou du palladium avec des métaux des groupes secondaires Ib et VIIIb du système périodique et qui sont enrobées dans des colloïdes protecteurs, caractérisées en ce que les colloïdes protecteurs contiennent au moins un polymère avec des groupes bétaïne.

2. Nanoparticules solubles selon la revendication 1, caractérisées en ce qu'elles contiennent au moins un polymère avec des groupes bétaïne qui se dégrade par hydrolyse.

3. Nanoparticules solubles selon la revendication 1 ou 2, caractérisées en ce qu'elles ont un diamètre de 1 à 8 nm.

4. Nanoparticules solubles selon la revendication 1 ou 2, caractérisées en ce qu'elles ont un diamètre de 2 à 6 nm.

5. Nanoparticules solubles selon l'une ou plusieurs des revendications 1 à 4, caractérisées en ce qu'elles contiennent au moins un polymère avec des groupes bétaïne qui porte une chaîne latérale constituée d'un reste alkylène de 2 à 12 atomes de carbone.

6. Nanoparticules solubles selon l'une ou plusieurs des revendications 1 à 4, caractérisées en ce qu'elles contiennent au moins un polymère avec des groupes bétaïne qui porte une chaîne latérale constituée d'un reste alkylène de 2 à 4 atomes de carbone.

7. Nanoparticules solubles selon l'une ou plusieurs des revendications 1 à 6, caractérisées en ce que la bétaïne est une carbobétaïne de formule -N⁺R¹R²-(CH₂-)ₙ-CO₂-, une phosphobétaïne de formule -N⁺R¹R²-(CH₂-)ₙ-PO₃- ou une sulfobétaïne de formule -N⁺R¹R²-(CH₂-)ₙ-SO₃-, où R' et R² peuvent être indépendamment l'un de l'autre identiques ou différents et représentent des restes alkyle de 1 à 6 atomes de carbone, et n est 1, 2 ou 3.

8. Nanoparticules solubles selon l'une ou plusieurs des revendications 1 à 7, caractérisées en ce que les colloïdes protecteurs sont des composés ayant les formules 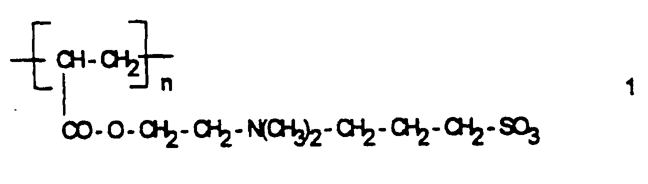 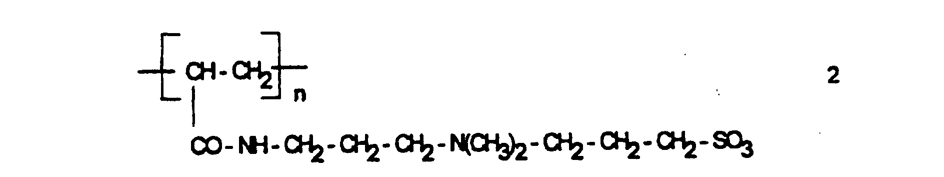 ou 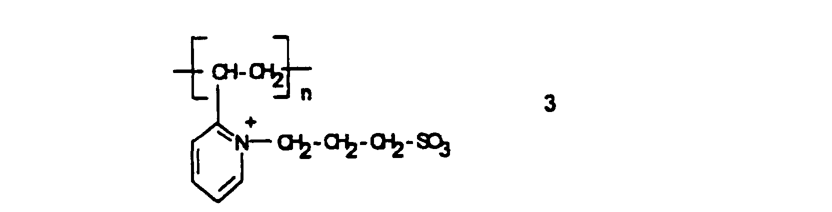 où n est 1, 2 ou 3.

9. Nanoparticules solubles selon l'une ou plusieurs des revendications 1 à 8, caractérisées en ce qu'elles contiennent au moins un polymère avec des groupes bétaïne présentant un degré de polymérisation de 50 à 10 000.

10. Nanoparticules solubles selon l'une ou plusieurs des revendications 1 à 8, caractérisées en ce qu'elles contiennent au moins un polymère avec des groupes bétaïne présentant un degré de polymérisation de 100 à 1 000.

11. Nanoparticules solubles selon l'une ou plusieurs des revendications 1 à 10, caractérisées en ce qu'elles contiennent un polymère qui contient, en plus de monomères contenant des groupes bétaïne, des monomères choisis dans le groupe constitué par l'acide acrylique, des esters de l'acide acrylique, des amides de l'acide acrylique, des carboxylates de vinyle, des éthers de vinyle et d'alkyle, la N-vinylpyridine, la N-vinylpyrrolidone et des N-vinylcarboxamides.

12. Procédé de préparation de nanoparticules solubles selon l'une ou plusieurs des revendications 1 à 11 par réaction d'un composé de palladium seul ou d'un composé de palladium avec d'autres composés de métaux des groupes secondaires Ib et VIIIb du système périodique avec un agent réducteur dans l'eau ou dans un solvant, caractérisé en ce que l'on effectue la réduction en présence d'un colloïde protecteur contenant au moins un polymère portant des chaînes latérales avec un groupe bétaïne, ou en ce que l'on ajoute le colloïde protecteur au sol formé après l'étape de réduction.

13. Procédé selon la revendication 12, caractérisé en ce que l'on purifie le sol par reprécipitation ou on le concentre par évaporation.

14. Procédé selon la revendication 12 ou 13, caractérisé en ce que les produits de départ pour la préparation des nanoparticules solubles sont des composés solubles.

15. Procédé selon les revendications 12 à 13, caractérisé en ce que les produits de départ pour la préparation des nanoparticules solubles sont l'acétate de palladium (II), le chlorure de palladium (II), l'acide tétrachloroaurique, l'acide hexachloroplatinique hydraté, l'acide hexachloroiridique hydraté, le chlorure de ruthénium (III), le nitrate de ruthénium (III) ou le chlorure de rhodium (III) hydraté.

16. Procédé selon l'une ou plusieurs des revendications 12 à 15, caractérisé en ce que l'on utilise les produits de départ pour la préparation des nanoparticules solubles à des concentrations de 0,1 à 100 g/l par rapport au solvant.

17. Procédé selon l'une ou plusieurs des revendications 12 à 15, caractérisé en ce que l'on utilise les produits de départ pour la préparation des nanoparticules solubles à des concentrations de 1 à 50 g/l par rapport au solvant.

18. Procédé selon l'une ou plusieurs des revendications 12 à 17, caractérisé en ce que l'on utilise comme agent réducteur des composés inorganiques ou des composés organiques.

19. Procédé selon l'une ou plusieurs des revendications 12 à 17, caractérisé en ce que l'on utilise comme agent réducteur l'hydrazine, l'hydroxylamine, l'hypophosphite de sodium, le borohydrure de sodium, l'hydrogène, le formaldéhyde, l'hydroxyméthanesulfinate de sodium ou des monoalcools ou des dialcools comme l'éthanol ou l'éthylèneglycol.

20. Procédé selon l'une ou plusieurs des revendications 12 à 19, caractérisé en ce que l'on utilise l'agent réducteur en des quantités stoechiométriques par rapport au composé métallique ou aux composés métalliques.

21. Procédé selon l'une ou plusieurs des revendications 12 à 19, caractérisé en ce que l'on utilise l'agent réducteur en un excès de 10 à 100 % par rapport au composé métallique ou aux composés métalliques.

22. Procédé selon l'une ou plusieurs des revendications 12 à 21, caractérisé en ce que le solvant est le méthanol, l'éthanol, l'éthylèneglycol, la N-méthylpyrrolidone, le diméthylformamide, le diméthylacétamide ou le tétrahydrofurane, ou un mélange de ces solvants avec de l'eau.

23. Procédé selon l'une ou plusieurs des revendications 12 à 22, caractérisé en ce qu'il s'effectue à des températures de 0 à 200°C.

24. Procédé selon l'une ou plusieurs des revendications 12 à 22, caractérisé en ce qu'il s'effectue à des températures de 20 à 100°C.

25. Sol pouvant être préparé par le procédé selon l'une ou plusieurs des revendications 12 à 24, caractérisé en ce qu'il contient des électrolytes.

26. Sol pouvant être préparé par le procédé selon l'une ou plusieurs des revendications 12 à 24, caractérisé en ce qu'il contient des chlorures, des bromures ou des iodures comme électrolytes.

27. Catalyseurs pour la préparation d'acétate de vinyle, caractérisés en ce que l'on applique sur un support de catalyseur un sol des nanoparticules selon l'une des revendications 1 à 11 par infiltration, pulvérisation, immersion, imprégnation, séchage par pulvérisation, enrobage de type *hicoating* ou enrobage en lit fluidisé.

28. Catalyseurs selon la revendication 27, caractérisés en ce que l'on élimine le colloïde protecteur par traitement avec une base.

29. Catalyseurs selon la revendication 27 ou 28, caractérisés en ce qu'ils contiennent en outre un ou plusieurs métaux choisis dans le groupe constitué par Zr, Ti, Ba et Re.

30. Catalyseurs selon la revendication 27 ou 29, caractérisés en ce que l'on élimine le colloïde protecteur par dégradation par oxydation par calcination à l'air à 300-500°C.
